# EUROPÄISCHE PATENTSCHRIFT

(11) **EP 0 625 313 B1**
(45) Veröffentlichungstag und Bekanntmachung des Hinweises auf die Patenterteilung: **07.10.1998**
(21) Anmeldenummer: 94107191.2
(22) Anmeldetag: 07.05.1994
(51) Int. Cl.: A23L 1/305, C07K 5/06, A61K 31/70, A61K 9/00

(54) **Hochkalorische, niederosmolare Lösung zur totalen parenteralen Ernährung durch periphervenöse Applikation**
High-calorie, low-osmolarity solution for total parenteral nutrition via periperal-venous administration
Solution d'une teneur élevée en calories et de faible osmolarité pour l'alimentation parentérale entière par application veineuse périphérique

(30) Priorität: 15.05.1993 DE 4316326
(43) Veröffentlichungstag der Anmeldung: 23.11.1994
(73) Patentinhaber: Fresenius AG, 61350 Bad Homburg v.d.H (DE)
(72) Erfinder: Sommermeyer, Dr. Klaus, D-61191 Rosbach v.d.H (DE); Weidler, Burghard, Prof.Dr., D-61191 Rosbach v.d.H (DE)
(74) Vertreter: Luderschmidt, Schüler & Partner GbR

(56) Entgegenhaltungen:
- EP-A- 0 161 471
- EP-A- 0 182 356
- EP-A- 0 457 314
- DE-A- 2 429 034
- US-A- 4 567 045
- PATENT ABSTRACTS OF JAPAN vol. 10, no. 182 (C-356) 25. Juni 1986 & JP-A-61 030 522 (DAIGO EIYOU KAGAKU KK) 12. Februar 1986

## Beschreibung

Gegenstand der vorliegenden Erfindung ist eine hochkalorische, niederosmolare Lösung zur totalen parenteralen Ernährung durch periphervenöse Applikation mit einer Osmolarität von mindestens 900 mosmol/l, enthaltend Aminosäuren, Kohlenhydrate, Fett und Elektrolyte.

Unter parenteraler Ernährung wird die Zufuhr von Nährstoffen auf intravenösem Wege, also unter Umgehung der Verdauung und Resorption im Magen-Darm-Trakt verstanden. Bei der totalen parenteralen Ernährung werden hochkalorische Lösungen verwendet, die mehrere Energieträger enthalten. Die periphervenöse Applikation von hochkalorischen Mischungen, die eine theoretische Osmolarität von über 900 mosmol aufweisen, zur totalen parenteralen Ernährung ist jedoch aufgrund der hierbei auftretenden Nebenwirkungen in Form von Venenreizungen und Venenentzündungen nicht empfohlen. Solche hochkalorischen Mischungen, die im übrigen alle für die Ernährung notwendigen Bausteine enthalten, wie Glukose, Fett, Aminosäuren und Elektrolyte, gegebenenfalls ergänzt durch Spurenelemente und Vitamine, müssen über einen zentralen Katheter in große Blutgefäße appliziert werden, wobei unmittelbar nachdem die Mischung die Blutbahn erreicht hat, eine intensive Durchmischung der Mischung mit der Blutbahn erfolgt, so daß sich deren größere Osmolarität nicht mehr negativ auswirken kann. Notwendige Voraussetzung für diese Applikationsweise der Nahrung ist jedoch, daß vorher ein Katheter gesetzt wird, was wiederum einen relativ kritischen operativen Eingriff erforderlich macht. Ein solcher operativer Eingriff wird gemäß üblicher Praxis in Krankenhäusern insbesondere dann ungern durchgeführt, wem nicht ohnehin aufgrund von anderen medizinischen Indikationen ein zentralvenöser Zugang benötigt wird. In kleineren Krankenhäusern ist es daher günstiger, die Patienten auf periphervenösem Wege zu ernähren. Eine periphervenöse Applikation der Nahrung ist auch für ambulante Patienten erheblich vorteilhafter.

Ein für die periphervenöse Verabreichung geeignetes bekanntes Produkt zur totalen parenteralen Ernährung ist z.B. Vitrimix KV^{R} der Firma Kabi Pharma, das aus Intralipid^{R} 20% und Vamin^{R} mit Glukose besteht und eine Osmolarität von 960 mosmol/l besitzt. Der pH-Wert dieses Produktes beträgt 5,2.

Aufgabe der vorliegenden Erfindung ist es, eine hochkalorische niederosmolare Lösung für die totale parenterale Ernährung bereitzustellen, die alle für die Ernährung notwendigen Bestandteile enthält und dennoch periphervenös appliziert werden kann, ohne daß die bisher mit der periphervenösen Applikation verbundenen Nachteile in Form von Venenreizung und Venenentzündung auftreten.

Erfindungsgemäß wurde überraschend gefunden, daß diese Aufgabe mit einer Lösung der eingangs genannten Art gelöst werden kann, die dadurch gekennzeichnet ist, daß sie glycerinfrei ist und einen pH-Wert im neutralen Bereich aufweist. Die erfindungsgemäßen Lösungen weisen für die periphere Applikation gute Verträglichkeit auf und sind verträglicher als das bekannte, vorstehend genannte Produkt, das gegenüber der erfindungsgemäßen Lösung einen pH-Wert von 5,2 aufweist und Glycerin enthält sowie frei von Phosphat ist.

Die Osmolarität der erfindungsgemäßen Lösung beträgt mindestens 900 mosmol/l, geeigneterweise 900 bis 1.400 mosmol/l, vorzugsweise 900 bis 1.100 mosmol/l und insbesondere 900 bis 1.000 mosmol/l.

Unter "pH-Wert im neutralen Bereich" wird ein pH-Wert um pH 7, d.h. pH 6,5 bis 7,5 verstanden, wie er im physiologischen Bereich vorliegt.

Die erfindungsgemäße Lösung besteht aus 3 Teillösungen, d.h.
a) einer Aminosäurelösung,
b) einer Kohlenhydratlösung (vorzugsweise Glucoselösung) und
c) einer glycerinfreien Fettemulsion,
wobei diese Teillösungen unmittelbar vor der Applikation unter Bildung der erfindungsgemäßen Lösung miteinander vermischt werden. Die pH-Werte dieser Teillösungen werden erfindungsgemäß so aufeinander abgestimmt, daß die nach Vermischen dieser Teillösungen resultierende erfindungsgemäße Lösung, die periphervenös appliziert wird, einen pH-Wert von etwa pH 7, z.B. einen pH-Wert von pH 6,6 bis 7,2 aufweist.

Die Aminosäurelösung enthält alle für den täglichen Bedarf notwendigen Aminosäuren, wobei die Aminosäuren zum Teil in Form von Peptiden, vorzugsweise Dipeptiden, wie z.B. L-Alanin-L-Glutamin, Glycin-L-Tyrosin etc. vorliegen können. In der Aminosäurelösung kann auch ein Teil der erforderlichen Elektrolyte enthalten sein. Vorzugsweise ist in der Aminosäurelösung ein Phosphatanteil, z.B. in Form von Natrium-glycerophosphat enthalten. Vorzugsweise werden zur Verminderung der Osmolarität der Elektrolyte mehrwertige Anionen organischer Säuren, wie z.B. von L-Äpfelsäure eingesetzt.

Ein Beispiel für eine geeignete Zusammensetzung der Aminosäurelösung ist folgende:

| | | |
|---|---|---|
| L-Arginin | 12,0 g/l | 68,9 mmol/l |
| L-Isoleucin | 5 g/l | 38,11 mmol/l |
| L-Leucin | 7,4 g/l | 56,4 mmol/l |
| L-Valin | 6,20 g/l | 52,9 mmol/l |
| L-Methionin | 4,324 g/l | 28,98 mmol/l |
| L-Phenylalanin | 3,573 g/l | 21,63 mmol/l |
| L-Threonin | 4,40 g/l | 36,94 mmol/l |
| L-Alanyl-L-Glutamin | 20,0 g/l | 92,1 mmol/l |
| L-Prolin | 11,0 g/l | 95,6 mmol/l |
| L-Serin | 5,0 g/l | 47,57 mmol/l |
| L-Lysinhydrochlorid | 8,25 g/l | 45,16 mmol/l |
| L-Histidin | 3,0 g/l | 19,33 mmol/l |
| Glycin | 6,0 g/l | 79,9 mmol/l |
| N-Acetyl-L-Tyrosin | 2,067 g/l | 9,26 mmol/l |
| L-Asparaginsäure | 2,20 g/l | 16,53 mmol/l |
| L-Tryptophan | 2,0 g/l | 9,79 mmol/l |
| L-Äpfelsäure | 5,50 g/l | 41,01 mmol/l |
| Natrium-glycerophosphat x 5 H₂O | 3,061 g/l | 10,00 mmol/l |
| Natriumhydroxid | 1,6 g/l | 40,00 mmol/l |
| Kaliumhydroxid 85%ig | 1,551 g/l | 23,50 mmol/l |
| Wasser für Injektionszwecke | 922 ml, | |

wobei die Gehalte der Aminosäuren um ± 20 % variieren können und auch andere physiologische Aminosäuren, wie z.B. Tyrosin, enthalten können. Gegebenenfalls können sich die Gehalte der Elektrolyte in ihren Relationen zueinander verschieben. Weiterhin ist auch die Aminosäurelösung ohne den Gehalt an L-Alanyl-L-Glutamin möglich.

Die Glucoselösung enthält geeigneterweise den Bedarf an Glucose sowie weitere erforderliche Elektrolyte. Ein Beispiel für eine geeignete Zusammensetzung dieser Glucoselösung ist folgende:

| | | |
|---|---|---|
| Glucosemonohydrat für Injektionszwecke | 275,0 g/l | 1.387 mmol/l |
| Calciumchlorid x 2H₂O | 0,917 g/l | 6,24 mmol/l |
| Kaliumchlorid | 2,471 g/l | 33,13 mmol/l |
| Magnesiumchlorid x 6H₂O | 1,269 g/l | 6,24 mmol/l |
| Zinkchlorid | 0,00844 g/l | 0,0619 mmol/l |
| Wasser für Injektionszwecke | 817 ml | |

Gemäß einer weiteren Ausführungsform der vorliegenden Erfindung kann die Glucose teilweise durch Maltose ersetzt sein.

Als Fettemulsion geeignet ist jede übliche für die parenterale Ernährung eingesetzte Fettemulsion mit der Maßgabe, daß sie kein Glycerin enthält. Gegebenenfalls können zur Stabilisierung in der erfindungsgemäß einsetzbaren Fettemulsion geringe Mengen Aminosäuren, wie z.B. Glycin enthalten sein.

Ein Beispiel für die Zusammensetzung einer geeigneten Fettemulsion ist folgende:

| | | |
|---|---|---|
| Sojabohnenöl | 200,0 g/l | |
| Ölsäure-Natriumsalz | 0,30 g/l | 0,985 mmol |
| Eilecithin (der Fa. Lipoid KG, Ludwigshafen) | 12,00 g/l | |
| Wasser für Injektionszwecke | 770 ml | |

Die erfindungsgemäßen Lösungen können gegebenenfalls übliche Hilfs- und Zusatzstoffe enthalten.

Bis zum Zeitpunkt des Vermischens dieser 3 Teillösungen, was unmittelbar vor Applikation erfolgt, werden diese Teillösungen getrennt voneinander in geeigneten Gefäßen oder Behältern aufbewahrt und gelagert, z.B. in Gefäßen oder Behältern aus Glas oder Kunststoffen, die zur Lagerung von Flüssigkeiten für medizinische Zwecke geeignet sind.

Gemäß einer besonders bevorzugten Ausführungsform können die Aminosäurelösung und die Glucoselösung, wie sie vorstehend erläutert wurden, in einem Doppelkammersystem (z.B. einem Doppelkammerbeutel, wie er aus der EP 01 61 471 bekannt ist) angeordnet sein und kann die Fettemulsion entweder über eine bereitzustellende Flasche oder über einen weiteren Beutel beigefügt werden, wobei diese Lösungen unmittelbar nach dem Vermischen periphervenös appliziert werden. Vorzugsweise ist der weitere Beutel mit Sauerstoff-Sperrschichten, gegebenenfalls auch mit Sauerstoffabsorbentien ausgestattet. Als Material für diesen weiteren Beutel geeignet ist jedes zur Lagerung von Fettemulsionen bekanntes Material.

Bevorzugt ist auch eine Ausführungsform, gemäß welcher die drei Teillösungen in drei Kompartimenten eines 3-Kammerbeutels angeordnet sind und ebenfalls - wie vorstehend für die Ausführungsform mit dem Doppelkammersystem beschrieben - erst unmittelbar vor Applikation miteinander vermischt werden.

Bei der periphervenösen Applikation von hochkalorischen, niederosmolaren Lösungen zur totalen parenteralen Ernährung ist die Infusionsgeschwindigkeit der Lösung von Bedeutung. Bei Untersuchungen mit der erfindungsgemäßen Lösung wurde gefunden, daß mit dieser Lösung eine höhere Applikationsgeschwindigkeit toleriert wird, als der üblicherweise - bezogen auf Aminosäuren (0,1 g Aminosäuren/kg Körpergewicht · h) empfohlenen Geschwindigkeit entspricht.

Die erfindungsgemäße Lösung stellt eine vollbilanzierte Nahrung dar. Sie ist trotz einer hohen Osmolarität periphervenös gut verträglich und weist keine, im Vergleich zu einer isotonen Kochsalzlösung, gesteigerte Nebenwirkungsrate in bezug auf die Venenverträglichkeit auf. Mit der erfindungsgemäßen Lösung kann eine totale parenterale Ernährung auf periphervenösem Weg ohne Auftreten der gefürchteten Venenreizung und Venenentzündung durchgeführt werden. Mit der erfindungsgemäßen Lösung ist auch die totale parenterale Ernährung von ambulanten Patienten sowie von stationären Patienten in kleinen Krankenhäusern ohne Komplikation und ohne die Notwendigkeit des Setzens eines zentralen Katheters ermöglicht.

Die nachfolgenden Beispiele dienen der Erläuterung der vorliegenden Erfindung.

### Beispiel 1

Herstellung einer erfindungsgemäßen Lösung. Zur Herstellung einer erfindungsgemäßen Lösung wurden eine Aminosäurelösung, eine Glucoselösung und eine Fettemulsion in folgender Weise hergestellt.
a) Herstellung der Aminosäurelösung
In einem mit Stickstoff begasten Behälter wurden 922 ml Wasser für Injektionszwecke gebracht. Die Temperatur wurde zwischen 25 und 30°C gehalten, wobei so lange mit Stickstoff begast wurde, bis der Sauerstoffgehalt unter 0,1 mg/l lag. Anschließend wurden unter Stickstoffbegasung und Lichtausschluß die folgenden Substanzen in der angegebenen Reihenfolge zugesetzt und gelöst, wobei während des Lösens der Substanzen vom Boden aus mit Stickstoff begast wurde:

| | | |
|---|---|---|
| L-Arginin | 12,0 g/l | 68,9 mmol/l |
| L-Isoleucin | 5 g/l | 38,11 mmol/l |
| L-Leucin | 7,4 g/l | 56,4 mmol/l |
| L-Valin | 6,20 g/l | 52,9 mmol/l |
| L-Methionin | 4,324 g/l | 28,98 mmol/l |
| L-Phenylalanin | 3,573 g/l | 21,43 mmol/l |
| L-Threonin | 4,40 g/l | 36,94 mmol/l |
| L-Alanyl-L-Glutamin | 20,0 g/l | 92,1 mmol/l |
| L-Prolin | 11,0 g/l | 95,6 mmol/l |
| L-Serin | 5,0 g/l | 47,57 mmol/l |
| L-Lysinhydrochlorid | 8,25 g/l | 45,16 mmol/l |
| L-Histidin | 3,0 g/l | 19,33 mmol/l |
| Glycin | 6,0 g/l | 79,9 mmol/l |
| N-Acetyl-L-Tyrosin | 2,067 g/l | 9,26 mmol/l |
| L-Asparaginsäure | 2,20 g/l | 16,53 mmol/l |
| L-Äpfelsäure | 5,50 g/l | 41,01 mmol/l |
| Natrium-glycerophosphat x 5 H₂O | 3,061 g/l | 10,00 mmol/l |
| Natriumhydroxid | 1,6 g/l | 40,00 mmol/l |
| Kaliumhydroxid, 85%ig | 1,551 g/l | 23,50 mmol/l |

Eine notwendige Korrektur des pH-Wertes von 7,3 bis 7,5 wurde durch Natriumhydroxid bzw. L-Äpfelsäure erreicht. Nach vollständigem Lösen der genannten Substanzen und Reduzieren des Sauerstoffgehaltes auf < 0,1 mg/l wurden 2,00 g L-Tryptophan (9,79 mmol/l) zugesetzt und gelöst. Die Lösung wurde durch Membranvorfilter und anschließend über Membranfilter 0,2 µm filtriert. Anschließend wurden 1000 ml der Lösung in ein Kompartiment eines Doppelkammer-Verbundfolienbeutels aus Polyamid 6,6/Polyethylen (PA 6,6/PE) gefüllt und mit einem Konnektor verschlossen. Das Behältnis wurde vor direkter Lichteinwirkung geschützt und vor Abfüllung wurde mit Stickstoff begast, damit der Sauerstoffgehalt der Lösung unter 0,1 mg/l lag.
Die Sterilisation erfolgte bei 121°C.
Der pH-Wert der Lösung betrug vor der Sterilisation 7,3 bis 7,5
und nach der Sterilisation 7,3 bis 7,5.
Dichte: 1,033 - 1,036 - 1,039.
Osmolarität: 899 mosmol/l.
b) Herstellung der Glucoselösung
In 817 ml Wasser für Injektionszwecke wurden die folgenden Substanzen in der angegebenen Reihenfolge unter Rühren gelöst.

| | | |
|---|---|---|
| Glucosemonohydrat für | 275,0 g/l | 1.387 mmol/l |
| Calciumchlorid x 2H₂O | 0,917 g/l | 6,24 mmol/l |
| Kaliumchlorid | 2,471 g/l | 33,13 mmol/l |
| Magnesiumchlorid x 6H₂O | 1,269 g/l | 6,24 mmol/l |
| Zinkchlorid | 0,00844 g/l | 0,0619 mmol/l |

Eine notwendige Korrektur des pH-Wertes von 4,5 bis 5,0 wurde mittels 25%iger Salzsäure durchgeführt. Die erhaltene Lösung wurde durch Membranvorfilter und anschließend über Membranfilter 0,2 µm filtriert. 800 ml der erhaltenen Lösung wurden in das 2. Kompartiment des Doppelkammer-Verbundfolienbeutels aus PA 6,6/PE gefüllt und verschlossen. Nach der Sterilisation wurde der trockene Beutel mit einem Umbeutel aus PE/PA 6,6 versehen.
Die Sterilisation erfolgte bei 121°C.
Der pH-Wert vor der Sterilisation: 4,5 bis 5,0
nach der Sterilisation: 3,5 bis 5,5
Dichte: 1,092 - 1,095 - 1,098
Osmolarität: 1.491 mosmol/l
c) Herstellung der Fettemulsion
169,7 ml Wasser für Injektionszwecke wurden in einem mit Stickstoff begasten Behälter gebracht. Die Temperatur wurde bei 55-60°C gehalten. Das Wasser wurde so lange mit Stickstoff begast, bis der Sauerstoffgehalt unter 0,1 mg/l lag. Unter Stickstoffbegasung wurden 12,00 g Eilecithin (Fa. Lipoid KG, Ludwigshafen) innerhalb von 2 min zugesetzt und bei laufendem grobem Ultra Turrax I und einem Rührer 15 min zerkleinert. In einen weiteren mit Stickstoff begasten Behälter wurden 75 ml Wasser für Injektionszwecke gebracht, wobei die Temperatur bei 55-60°C gehalten wurde. Es wurde so lange mit Stickstoff begast, bis der Sauerstoffgehalt unter 0,1 mg/l lag. Anschließend wurden 0,30 g Ölsäure-Natriumsalz (Fa. Fresenius) zugesetzt und langsam unter Rühren gelöst. Die 55-60°C warme Lösung wurde mit Stickstoffdruck innerhalb von 10 min durch ein 0,2 µm Membranfilter in den ersten, Lecithin enthaltenden Behälter gebracht. Unter Stickstoffbegasung wurden 200,0 g Sojabohnenöl auf 55-60°C erwärmt und durch ein Nylonmembranfilter 0,2 µm innerhalb von 20-25 min bei laufendem feinem und grobem Ultra Turrax und Rührwerk in den die Mischung enthaltenden Behälter gebracht. Nach beendeter Zugabe des Sojabohnenöles wurde die Rohemulsion 25 min weiter emulgiert. Die Temperatur der Rohemulsion betrug 60-65°C, wobei während der Herstellung der Rohemulsion ständig mit Stickstoff überlagert wurde. Nach Abschalten des Ultra Turrax wurde die Rohemulsion unter leichtem Rühren durch ein Membranfilter (40 µm) mit ca. 0,5 bar Stickstoff in den 2-Stufen-Homogenisator (400 bar 1. Stufe, 100 bar 2. Stufe) gebracht. Der erforderliche Homogenisierungsdruck wurde mit heißem Destillat über einen Bypass erreicht und anschließend wurde auf Emulsion umgeschaltet. Die Temperatur nach dem ersten Homogenisierschritt betrug 70-75°C, die Temperatur nach dem zweiten Homogenisierschritt 75-80°C. Die Lösung wurde auf 70-75°C abgekühlt. Der Behälter wurde nur mit Stickstoff überschichtet (nicht durchgeblasen), und gelegentlich wurde langsam umgerührt. Die Temperatur nach dem dritten Homogenisierschritt betrug 75-80°C, wonach die Lösung auf 70-75°C abgekühlt wurde.
Nach dem vierten Homogenisierschritt (Temperatur 80-85°C) wurde die Lösung so stark wie möglich abgekühlt und in eine Vorlage aus 525 ml auf 12-15°C abgekühltem, sauerstoffreiem destillierten Wasser gebracht. Während des Einlaufens der 4-fach homogenisierten Emulsion wurde nicht weiter mit Stickstoff begast, sondern nur mit Stickstoff überschichtet, gelegentlich wurde langsam gerührt. Es wurde auf 8-9°C gekühlt. Eine Korrektur des pH-Wertes von 8,7 bis 8,8 erfolgte mittels einer ca. 5%igen Natriumhydroxidlösung (Lösung in Wasser für Injektionszwecke, die durch ein Membranfilter 0,2 µm filtriert wurde). Nach Erreichen der Kühltemperatur wurde das Rühren beendet. Vor Abfüllen der Emulsion in farblose Glasbehälter für Infusionszubereitungen wurde die Emulsion durch Membranfilter (2-8 µm) filtriert. Die gefüllten Flaschen wurden vor dem Verschließen einer fraktionierten Begasung (Vakuum-Stickstoff-Vakuum-Stickstoff-Vakuum 0,420 bar als Enddruck) unterworfen, wobei der Sauerstoffgehalt im Gasraum nach der fraktionierten Begasung < 0,1 mg/l in der Lösung und < 0,3 Vol.% im Gasraum betrug. Die Lösung wurde vor Licht und Sauerstoffeinwirkung geschützt aufbewahrt.
Sterilisation in Glasflaschen: bei Rotation 121°C
pH-Wert vor der Sterilisation: 8,7 bis 8,8
nach der Sterilisation: 7,5 bis 8,7
Dichte: 0,979 - 0,982 - 0, 985
Osmolarität: ca. 0 mosmol/l.
d) Herstellung der erfindungemäßen Lösung
In einem Doppelkammerbeutel, der vorstehend genannten Art, bei dem in einem Kompartement 1.000 ml der Aminosäurelösung untergebracht waren und in dem zweitem Kompartement 800 ml der Glucoselösung untergebracht waren, wurden zunächst die beiden Lösungen (Aminosäurelösung und Glucoselösung) miteinander vermischt und anschließend wurden 500 ml der Fettemulsion diesem Gemisch aus Aminosäurelösung und Glucoselösung zugesetzt. 1.000 ml der so erhaltenen anwendungsfertigen erfindungemäßen Lösung hatten die folgende Zusammensetzung:

| | | |
|---|---|---|
| L-Arginin | 5,217 g/l | 29,95 mmol/l |
| L-Isoleucin | 2,174 g/l | 16,57 mmol/l |
| L-Leucin | 3,217 g/l | 24,52 mmol/l |
| L-Valin | 2,696 g/l | 23,00 mmol/l |
| L-Methionin | 1,88 g/l | 12,6 mmol/l |
| L-Phenylalanin | 1,553 g/l | 9,4 mmol/l |
| L-Threonin | 1,913 g/l | 16,06 mmol/l |
| L-Alanyl-L-Glutamin | 8,7 g/l | 40,06 mmol/l |
| L-Prolin | 4,783 g/l | 41,56 mmol/l |
| L-Serin | 2,174 g/l | 20,69 mmol/l |
| L-Lysinhydrochlorid | 3,587 g/l | 19,63 mmol/l |
| L-Histidin | 1,304 g/l | 8,4 mmol/l |
| Glycin | 2,609 g/l | 34,74 mmol/l |
| N-Acetyl-L-Tyrosin | 0,899 g/l | 4,028 mmol/l |
| L-Asparaginsäure | 0,957 g/l | 7,19 mmol/l |
| L-Tryptophan | 0,87 g/l | 4,261 mmol/l |
| L-Äpfelsäure | 2,391 g/l | 17,83 mmol/l |
| Natrium-glycerophosphat x 5 H₂O | 1,331 g/l | 4,348 mmol/l |
| Natriumhydroxid | 0,696 g/l | 17,40 mmol/l |
| Kaliumhydroxid 85%ig | 0,675 g/l | 10,22 mmol/l |
| Glucosemonohydrat für Injektionszwecke | 95,7 g/l | 482,8 mmol/l |
| Calciumchlorid x 2H₂O | 0,319 g/l | 2,17 mmol/l |
| Kaliumchlorid | 0,8594 g/l | 11,52 mmol/l |
| Magnesiumchlorid x 6H₂O | 0,4412 g/l | 2,17 mmol/l |
| Zinkchlorid | 0,002935 g/l | 0,02153 mmol/l |
| Sojabohnenöl | 43,48 g/l | |
| Ölsäure-Natriumsalz (Fa. Fresenius) | 0,0652 g/l | 0,2141 mmol |
| Eilecithin (Fa. Lipoid KG, Ludwigshafen) | 2,609 g/l | |
| Wasser für Injektionszwecke | als Rest | |

pH-Wert: 6,6 bis 7,2
Dichte: 1,042 - 1,045 - 1,048
Osmolarität: 910 mosmol/l
Titrationsacidität: 3,0 bis 11,0 mmol NaOH/l
Bei Untersuchungen an Probanden unter Verwendung der so hergestellten erfindungsgemäßen Lösung wurde die Infusionsgeschwindigkeit so gewählt, daß sie unter Bezug auf die Verwerung der Kalorien in Form von Glucose, Fett und Aminosäuren, d.h. unter Berücksichtigung der Metabolisierungsraten, die maximale tolerierbare Geschwindigkeit darstellte. Es wurde ein hervorragendes Ergebnis erreicht. Die Applikationsgeschwindigkeit betrug 0,2 g Aminosäuren/kg Körpergewicht · h. Dies entspricht der doppelten Geschwindigkeit, die üblicherweise - bezogen auf Aminosäuren - empfohlen wird (0,1 g/kg Körpergewicht · h).

### Beispiel 2

Eine weitere erfindungsgemäße Lösung wurde dadurch hergestellt, daß man in gleicher Weise, wie in Beispiel 1 beschrieben, die Aminosäurelösung, die Glucoselösung und die Fettemulsion herstellte und miteinander vor Verwendung vermischte, mit der Ausnahme, daß man 750 ml der in Beispiel 1 verwendeten Aminosäurelösung in ein Kompartiment des Doppelkammerbeutels brachte und in einem weiteren Kompartiment des Doppelkammerbeutels 1050 ml einer Glucoselösung mit einem Elektrolytgehalt, wie er in der Glucoselösung gemäß Beispiel 1 angewandt wurde, anordnete, wobei jedoch in 1050 ml der Glucoselösung 300 g Glucose enthalten waren. Zur Herstellung der erfindungsgemäßen Lösung wurden als weitere Teillösung 500 ml der in Beispiel 1 verwendeten Fettemulsion, die 100 g Fett enthielten, eingesetzt.

Die nach Vermischen dieser Teillösungen erhaltene erfindungsgemäße Lösung besaß einen pH-Wert von 6,6 bis 7,2 und eine Osmolarität von 1241 mosmol/l.

### Beispiel 3

Herstellung einer weiteren erfindungsgemäßen Lösung: Das Verfahren von Beispiel 1 wurde wiederholt mit der Ausnahme, daß 750 ml der in Beispiel 1 verwendeten Aminosäurelösung, 1050 ml einer Glucoselösung, die den gleichen Elektrolytgehalt wie die Glucoselösung gemäß Beispiel 1 aufwies, jedoch 250 g Glucose in 1050 ml Lösung enthielt, und 500 ml der 20 %igen Fettemulsion, wie sie gemäß Beispiel 1 verwendet wurde, miteinander vermischte. Wie in Beispiel 1 beschrieben, wurden auch hier diese einzelnen Teillösungen bis zum Vermischen getrennt voneinander aufbewahrt, wobei die Aminosäurelösung und die Glucoselösung in den beiden Kompartimenten eines Doppelkammerbeutels angeordnet waren.

Die erhaltene erfindungsgemäße Lösung hatte einen pH-Wert von 6,6 bis 7,2 und eine Osmolarität von 962 mosmol/l.

## Patentansprüche

1. Hochkalorische, niederosmolare Lösung zur totalen parenteralen Ernährung durch periphervenöse Applikation mit Osmolarität von mindestens 900 mosmol/l enthaltend Aminosäuren, Kohlenhydrate, Fett und Elektrolyte, dadurch gekennzeichnet, daß sie glycerinfrei ist und einen pH-Wert im Bereich von 6,5 bis 7,5 aufweist.

2. Lösung nach Anspruch 1, dadurch gekennzeichnet, daß die Osmolarität im Bereich von 900 bis 1.400 mosmol/l liegt.

3. Lösung nach Anspruch 2, dadurch gekennzeichnet, daß die Osmolarität im Bereich von 900 bis 1.100 mosmol/l liegt.

4. Lösung nach Anspruch 3, dadurch gekennzeichnet, daß die Osmolarität im Bereich von 900 bis 1.000 mosmol/l liegt.

5. Lösung nach einem der Ansprüche 1 bis 4, dadurch gekennzeichnet, daß sie aus
a) einer Aminosäurelösung mit Elektrolyten als erste Teillösung,
b) einer Kohlenhydratlösung mit Elektrolyten als zweite Teillösung und
c) einer glycerinfreien Fettemulsion als dritte Teillösung, die unmittelbar vor Applikation miteinander vermischt werden, besteht.

6. Lösung nach einem der Ansprüche 1 bis 5, dadurch gekennzeichnet, daß die Kohlenhydratlösung Glucose und/oder Maltose aufweist.

7. Lösung nach einem der Ansprüche 1 bis 6, dadurch gekennzeichnet, daß die Aminosäurelösung und/oder die Kohlenhydratlösung mehrwertige Anionen organischer Säuren enthält.

8. Lösung nach einem der Ansprüche 1 bis 7, dadurch gekennzeichnet, daß sie ein Peptid oder mehrere Peptide, insbesondere Dipeptide als Aminosäurekomponente enthält.

9. Lösung nach Anspruch 8, dadurch gekennzeichnet, daß sie L-Alanyl-L-Glutamin und/oder Glycyl-L-Tyrosin enthält.

## Claims

1. A high-calorie low-osmolarity solution for total parenteral nutrition by peripheral-venous application, with an osmolarity of at least 900 mosmol/l, containing amino acids, carbohydrates, fat and electrolytes, characterised in that it is free of glycerine and features a pH value in the range from 6.5 to 7.5.

2. A solution according to Claim 1, characterised in that the osmolarity is in the range from 900 to 1,400 mosmol/l.

3. A solution according to Claim 2, characterised in that the osmolarity is in the range from 900 to 1,100 mosmol/l.

4. A solution according to Claim 3, characterised in that the osmolarity is in the range from 900 to 1,000 mosmol/l.

5. A solution according to one of Claims 1 to 4, characterised in that it consists of:
a) An amino acid solution with electrolytes as the first part solution,
b) A carbohydrate solution with electrolytes as the second part solution, and
c) A glycerine-free fat emulsion as the third part solution, which are mixed with one another immediately before application.

6. A solution according to one of Claims 1 to 5, characterised in that the carbohydrate solution features glucose and/or maltose.

7. A solution according to one of Claims 1 to 6, characterised in that the amino acid solution and/or the carbohydrate solution contains multi-valent anions of organic acids.

8. A solution according to one of Claims 1 to 7, characterised in that it contains a peptide or several peptides, and dipeptides in particular, as amino acid components.

9. A solution according to Claims 8, characterised in that it contains L-alanyl-L-glutamine and/or glycl-L-tyrosine.

## Revendications

1. Solution à teneur élevée en calories et à faible osmolarité pour la nutrition parentérale totale par application périveineuse, possédant une osmolarité minimale de 900 mosmoles/l, contenant des acides aminés, des hydrates de carbone, des graisses et des électrolytes, caractérisée en ce qu'elle est exempte de glycérol et présente une valeur de pH dans le domaine de 6,5 à 7,5.

2. Solution selon la revendication 1, caractérisée en ce que l'osmolarité se situe dans le domaine de 900 à 1400 mosmoles/l.

3. Solution selon la revendication 2, caractérisée en ce que l'osmolarité se situe dans le domaine de 900 à 1100 mosmoles/l.

4. Solution selon la revendication 3, caractérisée en ce que l'osmolarité se situe dans le domaine de 900 à 1000 mosmoles/l.

5. Solution selon l'une quelconque des revendications 1 à 4, caractérisée en ce qu'elle est constituée par
a) une solution d'acides aminés contenant des électrolytes, à titre de première solution partielle,
b) une solution d'hydrates de carbone contenant des électrolytes, à titre de deuxième solution partielle, et
c) une émulsion grasse exempte de glycérol, à titre de troisième solution partielle, que l'on mélange l'une à l'autre immédiatement avant l'application.

6. Solution selon l'une quelconque des revendications 1 à 5, caractérisée en ce que la solution d'hydrate de carbone présente du glucose et/ou du maltose.

7. Solution selon l'une quelconque des revendications 1 à 6, caractérisée en ce que la solution d'acides aminés et/ou la solution d'hydrates de carbone contiennent des anions polyvalents d'acides organiques.

8. Solution selon l'une quelconque des revendications 1 à 7, caractérisée en ce qu'elle contient un peptide ou plusieurs peptides, en particulier des dipeptides, à titre de composant d'acide aminé.

9. Solution selon la revendication 8, caractérisée en ce qu'elle contient la L-alanyl-L-glutamine et/ou la glycyl-L-tyrosine.
